# EUROPEAN PATENT APPLICATION

(11) **EP 4 807 942 A1**
(43) Date of publication of application: **16.09.2026**
(21) Application number: 25163924.1
(22) Date of filing: 14.03.2025
(51) Int. Cl.: H02J 7/00, H02J 1/10

(54) **ENERGY STORAGE SYSTEM**

(71) Applicant: Hitachi Energy Ltd, 8050 Zürich (CH)
(72) Inventor: TENCA, Pierluigi, 14045 Incisa Scapaccino (AT) (IT)
(74) Representative: Vossius & Partner Patentanwälte Rechtsanwälte mbB

(57) **Abstract**

The disclosure provides an energy storage system (10) comprising: a plurality of energy storage sub-systems(12), wherein at least two of the plurality of energy storage sub-systems are directly or indirectly connected in parallel to each other, wherein each of the plurality of energy storage sub-systems (12) comprises one or more energy storage elements( 22) and a local converter (24) ; wherein each of the one or more energy storage elements (12) are configured to output a corresponding internal voltage and/or internal current ; wherein the corresponding local converter (24) is configured to convert the corresponding internal voltage of at least one of the corresponding one or more energy storage elements (12) to a higher output voltage and/or convert the internal current of at least one of the corresponding one or more energy storage elements to a lower output current.

## Description

The present disclosure relates to an energy storage systems and methods for using them.

The present energy storage systems (ESS) comprising also battery cells (e.g. battery energy storage systems (BESS)) may achieve several hundreds of volts at their externally accessible terminals by connecting several elementary cells (or groups of cells) in series, thereby constraining the current to be the same of all such groups connected in series. This raises the need of keeping all cell voltages within safe limits, slaves the operation of the whole system to the status of the most depleted or the most charged group in the series. If the unbalance between series connected groups becomes great, such limitation is striking and severely reduces the usability of the storage. The balance among cell groups requires necessarily, not only sufficiently, a condition that all elementary cells employed in the system belong to the same technology and have the same capacity, which is intrinsically a limitation to the system expansion. Additionally, the series connection of groups renders the addition of new parallel groups, hence the battery augmentation, complex, not to mention the replacement of one or more groups, an operation which requires to disable the whole energy storage for maintenance.

The above-mentioned disadvantages are at least partly overcome and/or advantages mentioned herein are at least partly achieved with the features of the independent claims. Dependent claims define preferred embodiments of the present disclosure.

The present disclosure relates to energy storage systems and methods for using them. Examples, alternatives, advantages and other explanations for these overlapping features are generally only explained once but also apply to the other embodiments.

The present disclosure relates to an energy storage system comprising: a plurality of energy storage sub-systems, wherein at least two of the plurality of energy storage sub-systems are directly or indirectly connected in parallel to each other, wherein each of the plurality of energy storage sub-systems comprises one or more energy storage elements and a local converter; wherein each of the one or more energy storage elements are configured to output a corresponding internal voltage and/or internal current; wherein the corresponding local converter is configured to convert the corresponding internal voltage of at least one of the corresponding one or more energy storage elements to a higher output voltage and/or convert the internal current of at least one of the corresponding one or more energy storage elements to a lower output current.

The energy storage system may act as a voltage source at its output nodes (may be externally accessible electrical terminals) and contains energy storage elements as part of the physical phenomena it uses to store energy. The interval of operating voltages at its output nodes may have its minimum which remain always much higher (for example at least one order of magnitude) than the maximum of the interval of operating voltages of any energy storage elements it uses.

The direct or indict connection, for example of the at least two of the plurality of energy storage sub-system in parallel, may be a connection with only a conductor and possibly one or more nodes in-between (direct connection) or with other (further) electrical elements connected in-between (indirect connection). Such other electrical elements may be switches (for example the node switches), resistances, capacitors, transformers, converters, and/or other electric elements. The plurality of energy storage sub-system connected in parallel is generally directly and/or indirectly connected in parallel. The more than one energy storage elements when connected in parallel are generally directly and/or indirectly connected in parallel.

Internal voltage and internal current are the voltage/current of preferably all of the one or more energy storage elements of one energy storage sub-system. When all of the one or more energy storage elements of one energy storage sub-system are (directly and/or indirectly) connected in parallel, the overall voltage applied to the local converter may be equal to the internal voltage of each of the energy storage elements and the overall current applied to the local converter may be a sum of all internal currents of the one or more energy storage elements.

The local converters may be DC to DC converters. Additionally or alternatively, the local converters may be small and/or bidirectional. Each of the local converters may comprise two (converter) switches and an inductor. Other setups of local converters are possible. The switches may be Silicon Carbide (SiC) and/or Gallium Nitride (GaN) semiconductor switches.

The output voltage and output current are the voltage/current of the corresponding energy storage sub-system after conversion of the corresponding local converter. When the plurality of energy storage sub-systems are (directly or indirectly) connected in parallel to each other, the system output voltage (may be called Vₜₒₜ) is equal to the output voltage of each of the plurality of energy storage sub-systems and the system current is a sum of the output currents of the plurality of energy storage sub-systems. Vₜₒₜ may be higher than the internal voltage of the energy storage elements. The higher output voltage may be an output voltage higher than the internal voltage. The lower output current may be an output current lower than the internal current.

Inter alia, such an ESS may need fewer energy storage elements to output the desired output voltage/current.

Various embodiments may preferably implement the following features.

Preferably, all of the plurality of energy storage sub-systems are connected in parallel to each other.

Preferably, none of the plurality of energy storage sub-systems are connected in series to each other.

In this manner, the output currents of the plurality of energy storage sub-systems are summed. The output voltages of each of the plurality of energy storage sub-systems are already increased, by the corresponding local converters, relative to the internal voltages of the energy storage elements. Preferably, there are no other energy storage sub-systems and/or other energy sources connected. No connection in series may mean no direct and no indirect connection in series.

Preferably, the plurality of energy storage sub-systems are three or a multiple of three energy storage sub-systems.

The plurality of energy storage sub-systems may be two or more, and/or three, and/or a multiple of three.

The one or more energy storage elements in any one of the plurality of the energy storage sub-systems may be one or more, three, and/or a multiple of three.

Preferably, none of the one or more energy storage elements of the plurality of energy storage sub-systems are (directly and/or indirectly) connected in series to each other and to any other energy storage element.

A current rating of the internal converters may be smaller than the overall current rating of the whole energy storage system.

It is possible that the one or more energy storage elements of some of the energy storage sub-systems are only connected in parallel and the one or more energy storage elements of some other of the energy storage sub-systems are not only or not at all connected in parallel. In some embodiments, the energy storage elements of one or more of the energy storage sub-systems are connected in series. This may comprise direct and/or indirect connection in series.

Preferably, the local converter of one or more of the plurality of energy storage sub-systems is configured to modify a ratio between the corresponding internal voltage (of at least one) of the corresponding one or more energy storage elements and the output voltage, and/or configured to modify a ratio between the corresponding internal current (of at least one) of the corresponding one or more energy storage elements and the corresponding output current.

The local converter may comprise SiC and/or GaN semiconductor switches. Owing to the capabilities of SiC, and especially GaN, semiconductor switches, and potentially also leveraging on the potentially very large number of energy storage elements used in the ESS, the disclosure achieves higher output voltages, compared to the internal voltages of the energy storage elements, without using any (or much fewer) series connection of the energy storage elements and any deterministic common centralized controller (like BMS) to maintain their balance. The proposed structure naturally allows: to use energy storage elements of different sizes and technologies, and to increase the number of the energy storage elements in a later time (augmentation after initial construction).

The SiC and GaN semiconductors allow to build increasingly economical very fast switches modules capable of high voltage, for example 1500 V, while possibly also keeping the current in the range of few tenth of Ampere.

Previous Silicon-based slower semiconductor switches allowed high voltage only together with high currents, i.e. one could not separate too much the two ratings, hence one could not build economically high voltage, but low current, converters. Especially GaN is preferred for realizing kW-range converters in few centimeter squares of area with carriers in multi-MHz range, although its nominal voltage may be still lower than SiC. Additionally, the reduced switching times of GaN and SiC switches allow limits for the duty cycle of the PWM modulation which were unthinkable with Silicon-based devices, thereby allowing buck-boost converters with input-output voltage ratio ranging in an enormously broader interval than before.

The local converters may be operated in discontinuous conduction mode in order to reduce the switching losses. The conduction mode may be turned on and off by the local controller. This may optimize efficiency. This may also reduce the cost of the potential inductor in the local converter, hence its physical size. It is possible to only use an air-core inductor by sufficiently high carrier frequency.

Preferably, the local converter is a buck-boost voltage or current converter.

Alternatives to the buck-boost converter are: a buck converter, a boost converter, a cuk converter, single-ended primary-inductor converter (SEPIC converter), a Flyback converter, a Dual Bridge DC-DC converter, a ZETA converter, or a combination of two or more of the before mentioned local converter.

Preferably, each energy storage sub-system further comprises a local controller configured to control the corresponding local converter.

Each of the local converters (and hence possibly also local controllers) may act completely uncorrelated with respect to each other. Their carriers may be completely asynchronous, even of different fundamental frequencies and possibly such frequencies can be dynamically changed too, according to the local needs of each specific energy storage element group in an energy storage sub-system. Each local converter may be simple. It is possible that only some of the energy storage sub-system comprise a local controller and others not. It is possible that at least one energy storage sub-system comprises a local controller. The local controller may control the corresponding local converter in a ratio between internal voltage and output voltage, or ratio between internal current and output current. The local controller may control the corresponding local converter by setting the output voltage and/or current. In some embodiments, the local controller determines state of health and/or state of charge of the one or more corresponding energy storage elements, for example through measurements, or by keeping track of usage and calculating these states.

Preferably, the energy storage system further comprises a central controller configured to send a, preferably the same, signal to each local controller.

The central controller may be simpler than any deterministic common centralized controller (like the common BMS of previous technology). The central controller of this disclosure may not need to receive the information from all battery cells and may not need to implement a complex algorithm and may not need to send specific (different for each local controller/converter) balancing commands to each specific cell to achieve the overall equalization of their voltages in the whole Energy Storage System. The Central Controller of this disclosure may only need to monitor the output voltage and/or current at the output nodes (terminals of the whole system) and broadcast one single command to all energy storage sub-systems, possibly also receiving some diagnostic information from them, but it is a simpler information, and it is not necessary for the instantaneous control of the overall systems. The central controller may keep track of the total number (N) of energy storage sub-systems. The central controller may determine the same signal by dividing the desired overall ESS system current by the total number of energy storage sub-systems.

Preferably, the signal is sent using a radio signal. This may facilitate the electrical insulation within the system.

The radio signal may be received by all of the local controller. Only one radio signal may be sent which may be valid for each of the local controller of the plurality of energy storage sub-systems. This makes communication easier. It simplifies the internal wiring of the system, a feature that may also highly reduce the possible propagation of local faults to other groups. The radio signal may be sent via a radio link.

Preferably, at least two, preferably all, of the local controllers of different energy storage sub-units are configured to not communicate with each other.

That is, in some embodiments, the local controllers of at least two different energy sub-units do not communicate with each other. Preferably, all local controllers do not communicate with each other. This reduces the amount of communication signals and the demand on hardware for communication.

Preferably, each local controller is configured to control the corresponding local converter to convert the corresponding internal current of at least one of the corresponding one or more energy storage elements to the lower output current, wherein the lower output current is determined by the local controller based on the signal and a random variable specific to the corresponding local controller.

The random variable may vary over time. The local controller may determine the random variable frequently (a different value), for example every 100 ms, every second, or the like.

There may be an average output current that each local converter may output (for example to the output nodes and/or injects into the common capacitor, mentioned later). Such a current may be willingly a random process with significant variance and whose time-varying ensemble expectation has an upper value that can be demanded externally via broadcast, as for example by the (radio) signal from the central controller.

Especially when the number N of (parallel) energy storage sub-systems is very large (for example one hundred or more or one thousand or more) the Central Limit Theorem, a fundamental law of nature, applies and reduces a variance of an overall system current (Iₜₒₜ - a random variable with expectation equal to the sum of all expectations from all energy storage sub-systems). The variance of Iₜₒₜ is smaller when the number of energy storage sub-systems is greater. As a consequence, the current Iₜₒₜ - hence also the current in the external terminals by a steady-state stable voltage Vₜₒₜ - may behave as an almost deterministic and constant variable.

The greater the number of energy storage sub-systems, hence the greater the number of local converters, the more deterministic such overall system currents (Iₜₒₜ) becomes and the more robust against local energy storage sub-system changes the system becomes. No Battery Management Systems (BMS) in that extend may be present - only the simpler central controller.

The central controller, which, in principle, may lie at the upper level of the energy storage system, may issue a command in the signal for the desired maximum value of total average current Iₜₒₜ/N that would need to be output (possibly injected in the common capacitor and or the output nodes) by each of the energy storage sub-systems comprised by the energy storage system in order to fulfill the total current request outside the storage system. The total voltage Vₜₒₜ might be one of the inputs of such global controller (which may be the central controller).

Each energy storage sub-system may comprise its own local controller that possibly does not exchange information with the other local controller of other energy storage sub-systems. Such a local controller may receive the aforementioned command Iₜₒₜ/N and it may decide whether to obey the command or not. Each local controller may decide this possibly depending on the charging status of the corresponding energy storage elements, as well as of the instantaneous value of its local random variable. The decision may depend on the technology of the corresponding energy storage elements under its supervision. According to this decision, the local controller may define the expectation current I_{cell_k} and it adds a random amount (may be the (local) random variable, and may be positive or negative) to it. The sum of expectation current I_{cell_k} and the random amount is to be output by the corresponding local converter as output current. The expectation current (especially of each single one of energy storage sub-systems/local converters) may be time-varying. The random amount can be distributed as pleased in general, for example uniformly or gaussian or else. Accordingly, the local controller may determine the random amount/random variable based on a uniform random number generation, a gaussian random number generation or another random number generation. Preferably, an average of many generated random numbers of the random number generation may be zero. In some embodiments, the average may be above zero to counteract possible outages of other energy storage sub-systems. The random amount may be distributed with the only constraint that the sum is always verified to lie within the interval of acceptable current for the present state of charge of that corresponding energy storage sub-group.

Such a random amount (may be a random variable) may change more rapidly than the expectation current I_{cell_k} (which is influence by Iₜₒₜ/N broadcasted by the global controller, and how fast the expectation current changes may be based on the command Iₜₒₜ/N from the global controller). This may render the overall current output (potentially current injected into the common capacitor) to provide a better stochastic result. Stochastic result may mean the sum of output currents at the points of common coupling and/or at the output nodes. This may be because this sum stochastically may correspond, or be close to, the desired overall system current due to the central limit theorem. If all energy storage sub-systems are in a state of charge that allows the broacasted desired value Iₜₒₜ/N to be individually fulfilled by all energy storage sub-systems (as output voltage), then the total current Iₜₒₜ will have a very low variance and desired system expectation, which (by bounded, steady-state stable, total voltage Vₜₒₜ) reflects itself in the average value of the external current at the output terminals of the energy storage system. If only a few (for example less than 5%) energy storage sub-systems do not fulfill the desired value, and especially when the number of energy storage sub-systems is large (for example 100 or more), the influence on the overall current may be small and/or negligible.

The greater N, the more robust and deterministic the current Iₜₒₜ appears, simply because of the Central Limit Theorem that rules the distribution of a random variable composed by the sum of a very large number or independent random variables.

The idea in some embodiments may be to change the addition of the energy storage element voltage sources from previous solutions, on which there is little degree of freedom, to the addition of independent energy storage sub-systems current sources injected into a common integrator for their sum (possibly to the common capacitor). This may be further improved by local converters possibly being small high voltage converters comprising SiC and GaN switches. By topological structure all energy storage sub-system output currents can be varied considerably and rendered independent random variables. This may happen also by asynchrony and frequency difference among the PWM carriers of the single converters. The sum of the output currents may be - by being many - naturally ruled by the Central Limit Theorem.

If, on the other hand, several (for example more than 10% of all energy storage sub-systems) energy storage sub-systems are in a state of charge that does not allow to fulfill the desired value Iₜₒₜ/N, then the total current Iₜₒₜ and the external current at the energy storage system terminals will have an absolute value lower than | Iₜₒₜ/N |, like it happens for a traditional battery system where the BMS has the ultimate authority on the current request value for the converter connected to it. The central controller may keep track on a number of effectively working energy storage sub-systems (N_{eff}). The signals and commands may be send with N_{eff} replacing N.

The local controllers for the individual energy storage sub-systems may independently broadcast (possibly by radio link(s)) diagnostic data about corresponding energy storage elements to the global controller or to other entities outside the energy storage system. The diagnostic data may also be that the corresponding energy storage sub-system does not fulfill the desired value. The global controller may then update the number N (to N_{eff}) in case some energy storage sub-system fails or it is added. The global controller may additionally or alternatively open the switch connected between the corresponding energy storage sub-system and the common node.

Preferably, each local controller is configured to control the corresponding local converter to convert the corresponding internal voltage of at least one of the corresponding one or more energy storage elements to the higher output voltage, wherein the higher output voltage is determined by the local controller based on the signal and a random variable specific to the corresponding local controller. This may be implemented with according steps as the lower output current explained above (which may comprise that voltage instead of current is calculated).

Preferably, at least one of the plurality of energy storage sub-systems comprises two or more energy storage elements, wherein the two or more energy storage elements of each of the at least one of the plurality of energy storage sub-systems are connected in parallel.

Different energy storage sub-systems may comprise different numbers of energy storage elements. Some energy storage sub-systems may have the same number, different to the number of other energy storage sub-systems. A number of energy storage element in one energy storage sub-system may be one, two, three, a multiple of three, and/or four or more, and/or one hundred or more.

Preferably, the plurality of energy storage sub-systems is one hundred or more energy storage sub-systems.

Preferably, the one or more energy storage elements of the plurality of energy storage sub-systems are energy storage elements of at least two different technologies.

The different technologies may comprise at least two of the following: battery cells, including at least one of lithium ion cells, lead acid cells, nickel meatal hydride cells and/or nickel cadmium cells. Alternatives for further "different technologies" are: fuel cells, hydrogen cell, flywheel based storages and kinetical energy storage elements. Kinetical energy storage elements may be fast fly wheels which may store energy as kinetic energy by fast rotations. Different technologies of the energy storage elements can be simultaneously present in the overall energy storage system. In principle, any energy storage element technology that exchanges energy with the external world via at least two electrical terminals is suitable to be used in the disclosed concept. Energy storage elements may store electrical energy. The energy storage elements may be batteries.

Preferably, (each of) the plurality of energy storage sub-systems are connected to common nodes via a (corresponding) (node) switch for each of the plurality of energy storage sub-systems, wherein the corresponding switch is connected in series between the corresponding one of the plurality of energy storage sub-systems and one of the common nodes.

With a corresponding switch one energy storage sub-system can be disconnected. This may provide the possibility to exchange energy storage elements in the disconnected energy storage sub-system. The switches may be controlled by the central controller.

Preferably, all elements of the energy storage system are configured to work in direct current, DC.

In an alternative, the ESS may be in alternating current (AC).

Preferably, the ESS further comprises a common capacitor connected in parallel to the plurality of energy storage sub-systems. Another kind of short-time energy storage element behaving as voltage source is possible. The terminals of the common capacitor may represent the externally accessible terminals of the whole energy storage system. The voltage at the common capacitor may be Vₜₒₜ.

Preferably, the ESS is for high voltage. The ESS may be a high voltage ESS. In alternatives, the ESS may be for medium voltage and/or low voltage.

The present disclosure also relates to a method of using the energy storage system, the method comprising: converting, by the local converter of at least one of the plurality of energy storage sub-systems, the corresponding internal voltage of at least one of the corresponding one or more energy storage elements to a higher output voltage and/or the internal current of at least one of the corresponding one or more energy storage elements to a lower output current.

The present disclosure also relates to an energy storage system comprising: a plurality of energy storage sub-systems, wherein at least two of the plurality of energy storage sub-systems are directly or indirectly connected in parallel to each other, wherein each of the plurality of energy storage sub-systems comprises one or more energy storage elements, a local controller and a local converter; wherein the corresponding one or more energy storage elements are configured to output a corresponding internal voltage and/or internal current; wherein one or more energy storage elements of at least one energy storage sub-system are connected to the (corresponding) local converter of said energy storage sub-system; wherein at least one of the plurality of energy storage sub-systems comprises two or more energy storage elements all connected in parallel to each other; and wherein each of the local controller is configured to control the corresponding local converter to convert the corresponding internal voltage of at least one of the corresponding one or more energy storage elements to an output voltage and/or the corresponding internal currents of at least one of the corresponding one or more energy storage elements to an output current.

Further (one or more) additional features as explained above may also apply to the energy storage system disclosed just above.

Preferably, the at least one of the plurality of energy storage sub-systems comprising two or more energy storage elements all connected in parallel to each other has only the one corresponding local converter and/or only the one corresponding local controller. Preferably, the corresponding energy storage sub-systems with two or more energy storage elements have no further local converter and no further local controller (other than the one local controller and the one local converter).

In this case, the output current may be higher or lower than the internal currents, and/or the output voltage may be higher or lower than the internal voltage. This may apply to the magnitudes of the mentioned values. Such an ESS may have additional features as mentioned for other ESSs in this disclosure.

Embodiments of the disclosure may have some or all, and maybe further, advantages of the following:
The use of different energy storage element technologies in the same energy storage system.

The loss of some energy storage sub-systems by disabling and isolating (advisably also with dedicated fuses for additional protection) their local converters and/or by opening the corresponding switch. The ESS may comprise corresponding dedicated fuses for additional protection.

The addition of more energy storage sub-systems by connecting them in parallel to the common node (and possibly to the common capacitor), thereby intrinsically permitting battery augmentation to the system.

If proper disconnectors (as for example the node switch), either mechanical or electrical, are provided the concept may allow the replacement of energy storage sub-systems by disconnecting and reconnecting energy storage sub-systems without shutting off the whole energy storage system, thereby greatly improving its availability. This may for example be possible because of the parallel concept, first of all, and because the local controllers do not exchange any information among each other, as well as no deterministic control needs to know precisely when and where a new energy storage sub-system is added to update its algorithm accordingly.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows an exemplary energy storage system.
Fig. 2 shows a flow chart of a method 100 of using the energy storage system.

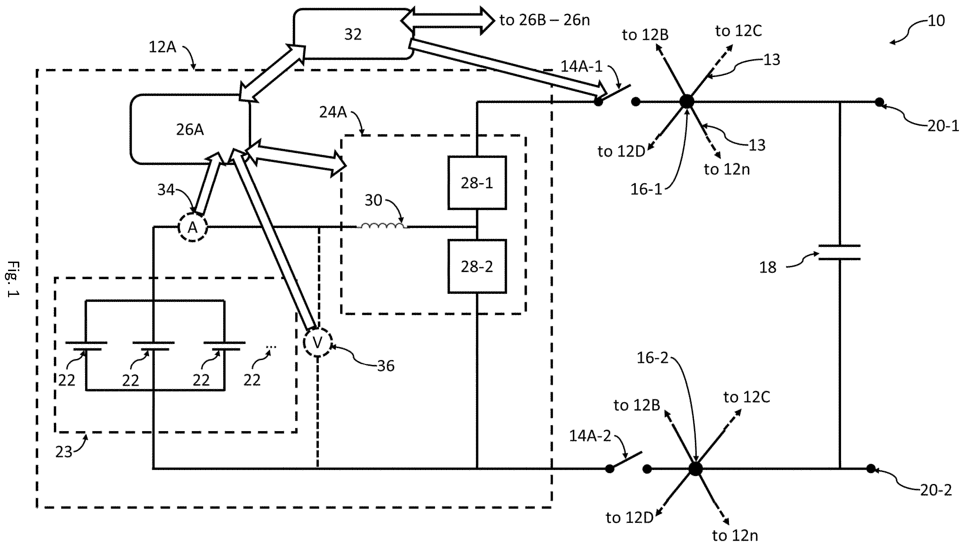

Fig. 1 shows an exemplary energy storage system 10 (ESS). The ESS 10 may be a battery ESS (BESS). The energy storage system 10 comprises an (first) energy storage sub-system 12A and further energy storage sub-systems 12B, 12C, 12D and following ("to 12n", not explicitly shown), two switches 14A-1 and 14A-2 corresponding to the first energy storage sub-system 12A, points of common coupling 16-1 and 16-2, a common capacitor 18, output nodes 20-1 and 20-2, and a central controller 32.

The ESS 10 may be used to power a load and/or to charge the energy storage elements 22 of the ESS 10 by a load or energy source, respectively, connected to the output nodes 20 (20-1 and 20-2).

The ESS 10 comprises a plurality of energy storage sub-systems 12 (reference sign 12 is short for 12A, 12B, 12C, etc.; the plurality of energy storage sub-systems 12 comprising the first energy storage sub-system 12A and the other energy storage sub-systems 12B to 12n). Each energy storage sub-system 12 of the plurality of energy storage sub-systems 12 may be identical or at least some of the energy storage sub-systems 12 may differ from each other. An exemplary setup of an energy storage sub-system 12 is as follows. The energy storage sub-system 12 comprises a plurality of energy storage elements 22 connected in parallel. The energy storage elements 22 may be one or more energy storage elements 22. The energy storage elements 22 may be all connected in parallel, or at least some are connected in parallel. In some embodiments, some energy storage elements 22 may be connected in series. The plurality of energy storage elements 22 may be grouped (shown by dashed box 23) and have common connections. The energy storage sub-system 12 further comprises a local converter 24 and a local controller 26.

While only one energy storage sub-system 12A is shown, further energy storage sub-systems 12 may be comprised. Such further energy storage sub-systems 12 are indicated in the figure by the connections and arrows 13 connecting to the common nodes 16. There may be two or more energy storage sub-systems 12, up to a number n of energy storage sub-systems 12 (n may correspond to N mentioned above). The plurality of energy storage sub-systems 12 are preferably all connected to the common nodes 16 in parallel. In some embodiments, some of the energy storage sub-systems 12 may be connected differently. Each of the further energy storage sub-systems 12B to 12n may also have one or two (node) switches 14 connected to the common nodes 16.

The exemplary local converter 24A shown in the shown energy storage sub-system 12A comprises two (converter) switches 28-1 and 28-2 and an inductor 30. Other setups of local converters 24 are possible. The switches 28 may be Silicon Carbide (SiC) and/or Gallium Nitride (GaN) semiconductor switches. The local converter 24 is (directly or indirectly) connected to the energy storage elements 22 of the corresponding energy storage sub-system 12.

The local controller 26 may control the corresponding local converter 24. The local controller may receive a signal (information flow and signals shown by thick arrows in the figure) from the central controller 32. The local controller 26 sends information about the state of the energy storage elements 22 in the corresponding energy storage sub-system 12 to the central controller 32. The information about the state may comprise information about a state of health and/or a state of charge of the energy storage elements, individually or summarized (for example averaged). The local controller 26 may receive current and/or voltage measurements from the current measurement device 34 and/or the voltage measurement device 36. The information about the state may also or alternatively be based on the current and/or voltage measurements. The local controller 26 may be powered by the energy storage elements 22 of the corresponding energy storage sub-system 12 or may have an individual power source.

The central controller 32 controls the local controller 26 of each of the plurality of energy storage sub-systems 12. To do so, the central controller 32 may send a signal to the specific local controller 26. In some embodiments, the central controller 32 sends the same signal to all local controller 26, for example by radio link. The central controller 32 may receive information from one or more local controller 26. Then the link between central controller 32 and local controller(s) 26 is bidirectional. In other embodiments, the link may be unidirectional - only from the central controller 32 to the local controller(s) 26. The central controller 32 may control the (node) switches 14. This controlling may be based on information received from the (corresponding) local controller 26. The central controller 32 may be a processor, a computer, a server, and/or the like.

Each energy storage sub-system 12 may comprise or have corresponding one or two (node) switch(es) 14. The switches 14 are connected between the local converter 24 and the common nodes 16. In fig. 1 two switches 14 are shown. Only one of them may suffice. In some embodiments, the local converter 24 may be used to connect and disconnect the corresponding energy storage elements 22 from the common nodes 16.

An energy storage sub-system may comprise a current measurement device 34 and/or a voltage measurement device 36. These devices measure the current/voltage of the plurality of energy storage elements 22 in the energy storage sub-system 12. The current measurement device 34 may be connected in series to the plurality of energy storage elements 22. The voltage measurement device 36 may be connected in parallel to the plurality of energy storage elements 22. The current measurement device 34 may be an ampere meter. The voltage measurement device 36 may be a voltmeter. The current measurement device 34 and the voltage measurement device 36 may be a combined measurement device. In alternative embodiments, the local controller 26 may calculate state values of the corresponding plurality of energy storage element 22 based on the instructions given to the local converter 24.

The voltage measurement may be used by the local controller or the central controller to determine when an energy storage element 22 or a plurality of energy storage elements 22 in one energy storage sub-system 12 has reached minimum or maximum voltage/charge. This information may be used to disconnect the energy storage sub-system 12 (especially in case of minimum charge, when a load is connected; or especially in case of maximum charge, when ESS is charged) or to connect the energy storage sub-system 12 (especially in case of maximum charge, when a load is connected; or especially in case of minimum charge, when ESS is charged). The voltage and/or current measurements may also or alternatively be used for safety and/or to determine when to exchange one or more energy storage elements 22 or an entire energy storage sub-system 12.

Information about the state of charge of one or more energy storage elements 22 may be used to implement energy balancing. The local controller and/or the central controller may control the ESS 10 to balance energy.

The common capacitor 18 has the output voltage (Vₜₒₜ) applied to it. the common capacitor 18 may be connected in parallel to another connection of the common nodes 16, which is not a connection for one of the plurality of energy storage sub-systems 12. Alternatively, there may be another kind of short-time energy storage element behaving as voltage source. The common capacitor 18 may be connected to the output nodes 20.

The output nodes 20 may be configured to connect to a load (not shown). In some embodiments, output node 20-2 may be kept at ground level and/or be grounded. This may increase security. It may also make an exchange of a faulty energy storage element 22 easier.

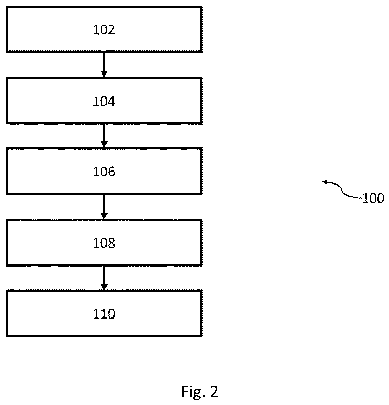

Fig. 2 shows a flow chart of a method 100 of using the energy storage system 10, for example of fig. 1. The method 10 may comprise any of the following steps 102 to 110. In step 102 the central controller 32 receives a current value (Iₜₒₜ) and/or a voltage value (Vₜₒₜ) to be provided at the nodes 20. At step 104, the central controller 32 determines the average (or maximum) current (Iₜₒₜ/N; also expectation current) and/or average (or maximum) voltage (Vₜₒₜ/N; also expectation voltage) each energy storage sub-system 12 should provide. In step 106, the central controller 32 provides the determined information of step 104 to the local controllers 26, preferably by radio link. In step 108 each local controller 26 determines an output current and/or output voltage based on the expectation current/expectation voltage and it adds (positive or negative) a random amount to it, and provides according instructions to the corresponding local converter 24. In step 110, the local converter 24 of at least one of the plurality of energy storage sub-systems 12 converts the corresponding internal voltage of at least one of the corresponding one or more energy storage elements 22 to the higher output voltage and/or the internal current of at least one of the corresponding one or more energy storage elements to the lower output current.

Method 100 may further comprise a step of opening and/or closing one or more of the node switches 14.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. An energy storage system comprising:
a plurality of energy storage sub-systems, wherein at least two of the plurality of energy storage sub-systems are directly or indirectly connected in parallel to each other, wherein each of the plurality of energy storage sub-systems comprises one or more energy storage elements and a local converter;
wherein each of the one or more energy storage elements are configured to output a corresponding internal voltage and/or internal current;
wherein the corresponding local converter is configured to convert the corresponding internal voltage of at least one of the corresponding one or more energy storage elements to a higher output voltage and/or convert the internal current of at least one of the corresponding one or more energy storage elements to a lower output current.

2. Energy storage system of claim 1, wherein all of the plurality of energy storage sub-systems are directly or indirectly connected in parallel to each other; and
preferably wherein none of the plurality of energy storage sub-systems are connected in series to each other.

3. Energy storage system of claim 1 or 2, wherein the plurality of energy storage sub-systems are three or a multiple of three energy storage sub-systems.

4. Energy storage system of any one of claims 1 to 3, wherein none of the one or more energy storage elements of the plurality of energy storage sub-systems are directly or indirectly connected in series to each other and to any other energy storage element.

5. Energy storage system of any one of claims 1 to 4, wherein the local converter of one or more of the plurality of energy storage sub-systems is configured to modify a ratio between the corresponding internal voltage of at least one of the corresponding one or more energy storage elements and the output voltage, and/or configured to modify a ratio between the corresponding internal current of at least one of the corresponding one or more energy storage elements and the corresponding output current.

6. Energy storage system of any one of claims 1 to 5, wherein the local converter is a buck-boost voltage or current converter.

7. Energy storage system of any one of claims 1 to 6, wherein each energy storage sub-system further comprises a local controller configured to control the corresponding local converter.

8. Energy storage system of claim 7, further comprising a central controller configured to send a, preferably the same, signal to each local controller.

9. Energy storage system of claim 8, wherein the signal is sent using a radio signal.

10. Energy storage system of any one of claims 7 to 9, wherein at least two, preferably all, of the local controllers of different energy storage sub-units are configured to not communicate with each other.

11. Energy storage system of claim 9 or 10, wherein each local controller is configured to control the corresponding local converter to convert the corresponding internal current of at least one of the corresponding one or more energy storage elements to the lower output current, wherein the lower output current is determined by the local controller based on the signal and a random variable specific to the corresponding local controller.

12. Energy storage system of any one of claims 1 to 11, wherein at least one of the plurality of energy storage sub-systems comprises two or more energy storage elements, wherein the two or more energy storage elements of each of the at least one of the plurality of energy storage sub-systems are connected in parallel.

13. Energy storage system of any one of claims 1 to 12, wherein the one or more energy storage elements of the plurality of energy storage sub-systems are energy storage elements of at least two different technologies.

14. Energy storage system of any one of claims 1 to 13, wherein the plurality of energy storage sub-systems are connected to common nodes via a switch for each of the plurality of energy storage sub-systems, wherein the corresponding switch is connected in series between the corresponding one of the plurality of energy storage sub-systems and one of the common nodes.

15. Method of using the energy storage system of any one of claims 1 to 14, the method comprising: converting, by the local converter of at least one of the plurality of energy storage sub-systems, the corresponding internal voltage of at least one of the corresponding one or more energy storage elements to a higher output voltage and/or the internal current of at least one of the corresponding one or more energy storage elements to a lower output current.
